(19)

**Europäisches Patentamt**

**European Patent Office**

**Office européen des brevets**

(11)  **EP 2 769 360 B1**

(12)  # FASCICULE DE BREVET EUROPEEN

(45) Date de publication et mention
de la délivrance du brevet:
**03.02.2016  Bulletin 2016/05**

(21) Numéro de dépôt: **12775001.6**

(22) Date de dépôt: **11.10.2012**

(51) Int Cl.:
***G06T 7/00*** *(2006.01)*

(86) Numéro de dépôt international:
**PCT/EP2012/070107**

(87) Numéro de publication internationale:
**WO 2013/057030 (25.04.2013 Gazette 2013/17)**

(54)  **PROCÉDÉ DE LOCALISATION D'OBJETS PAR RÉSOLUTION DANS L'ESPACE TRIDIMENSIONNEL DE LA SCÈNE**

VERFAHREN ZUM FINDEN VON OBJEKTEN DURCH AUFLÖSUNG IN EINEM DREIDIMENSIONALEN RAUM EINER SZENE

METHOD FOR LOCATING OBJECTS BY RESOLUTION IN THE THREE-DIMENSIONAL SPACE OF THE SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2011  FR 1159594**

(43) Date de publication de la demande:
**27.08.2014  Bulletin 2014/35**

(73) Titulaire: **Commissariat à l'Énergie Atomique et aux Énergies Alternatives 75015 Paris (FR)**

(72) Inventeurs:
• **DHOME, Yoann**
  **F-92160 Antony (FR)**
• **LUVISON, Bertrand**
  **F-91380 Chilly-Mazarin (FR)**
• **PHAM, Quoc-cuong**
  **F-94270 Le Kremlin Bicetre (FR)**

(74) Mandataire: **Hammes, Pierre Marks & Clerk France Immeuble Visium 22, avenue Aristide Briand 94117 Arcueil Cedex (FR)**

(56) Documents cités:
**EP-A2- 2 131 328**

• **ALEXANDRE ALAHI ET AL: "Sparsity Driven People Localization with a Heterogeneous Network of Cameras", JOURNAL OF MATHEMATICAL IMAGING AND VISION, KLUWER ACADEMIC PUBLISHERS, BO, vol. 41, no. 1 - 2, 27 janvier 2011 (2011-01-27), pages 39-58, XP019932874, ISSN: 1573-7683, DOI: 10.1007/S10851-010-0258-7**
• **ALEXANDRE ALAHI ET AL: "Sparsity-driven people localization algorithm: Evaluation in crowded scenes environments", PERFORMANCE EVALUATION OF TRACKING AND SURVEILLANCE (PETS-WINTER), 2009 TWELFTH IEEE INTERNATIONAL WORKSHOP ON, IEEE, PISCATAWAY, NJ, USA, 7 décembre 2009 (2009-12-07), pages 1-8, XP031619242, ISBN: 978-1-4244-5503-4**
• **ALEXANDRE ALAHI ET AL: "Sport players detection and tracking with a mixed network of planar and omnidirectional cameras", DISTRIBUTED SMART CAMERAS, 2009. ICDSC 2009. THIRD ACM/IEEE INTERNATIONAL CONFERENCE ON, IEEE, PISCATAWAY, NJ, USA, 30 août 2009 (2009-08-30), pages 1-8, XP031548107, ISBN: 978-1-4244-4620-9**

**Description**

L'invention se situe dans le domaine de la vidéosurveillance par caméras calibrées. Elle concerne un procédé de localisation d'objets d'intérêts dans une scène à partir d'images fournies par une caméra. Les objets d'intérêt peuvent notamment être des personnes ou des véhicules.

De nombreuses applications de traitement d'images visent à détecter des objets d'intérêts dans une image ou dans un flux d'images acquis par une caméra. Ces applications reposent sur des méthodes pouvant être classées selon deux familles. La première famille de méthodes s'appuie sur la reconnaissance de formes. Le principe consiste à reconnaître une ou plusieurs caractéristiques bien spécifiques de l'objet recherché, par exemple le contour d'une tête ou la silhouette d'une personne. La recherche de ces caractéristiques sur l'ensemble de la scène est une tâche rendue difficile, d'une part, par les déformations géométriques dues aux distorsions optiques des capteurs et aux différences de point de vue des objets recherchés et, d'autre part, par les occultations entre objets recherchés. A titre d'exemple, la silhouette d'une personne vue de face est très différente de celle d'une personne vue de dessus. Les distorsions optiques sont dues au type de caméra utilisé. Elles sont particulièrement prononcées notamment pour les caméras omnidirectionnelles et les caméras dites "fisheye". Or, les méthodes de reconnaissance de formes nécessitent un apprentissage sur des bases labellisées. Ces bases donnent des exemples de personnes ainsi que des contre-exemples en fonction d'un point de vue particulier et d'un type de caméra donné. En conséquence, la configuration d'un système de localisation d'objets d'intérêts utilisant une méthode de reconnaissance de formes est une tâche délicate, nécessitant la réalisation d'une base d'apprentissage spécifique au point de vue particulier de la caméra. La seconde famille de méthodes de détection d'objets dans une image se base sur un critère d'optimisation de l'espace tridimensionnel (3D). L'idée est de maximiser, dans l'image, le recouvrement entre un masque obtenu par soustraction de fond, et la projection d'un ou plusieurs modèles 3D de l'objet recherché. Un exemple d'une telle méthode est décrit dans le document Alahi Alexandre, L. Jacques, Y. Boursier et P. Vandergheynst. "Sparsity-driven People Localization Algorithm: Evaluation in Crowded Scenes Environments", IEEE International Workshop on Performance Evaluation of Tracking and Surveillance, Snowbird, Utah, 2009. Dans ce document, on considère une grille fixe de positions 3D au sol ainsi qu'un modèle géométrique de personne, en l'occurrence une ellipsoïde représentant la partie supérieure de la personne et un cylindre pour la partie inférieure. Par la suite, on appelle masque binaire une image dans laquelle chaque pixel prend soit une première valeur, par exemple '0', soit une deuxième valeur, par exemple '1', en fonction d'un paramètre du pixel considéré. Selon la méthode d'Alahi, pour chaque position de la grille, un masque binaire de la projection du modèle géométrique, appelé atome, est calculé. Chaque masque binaire prend la valeur '1' en chaque pixel correspondant à la projection du modèle géométrique dans l'image, et '0' ailleurs. La localisation des personnes dans l'image consiste alors à minimiser la différence entre le masque binaire obtenu par soustraction de fond et une combinaison linéaire d'atomes, chaque atome étant soit présent soit absent. Autrement dit, la méthode consiste à rechercher l'ensemble des positions sur la grille donnant, par projection d'un modèle géométrique en chacune de ces positions, l'image la plus ressemblante de l'image dans laquelle on recherche des personnes. L'un des principaux inconvénients de cette méthode est sa complexité algorithmique. La recherche des personnes est réalisée dans l'espace image, ce qui implique la résolution d'un système linéaire dont la dimension est égale au nombre de pixels dans l'image multiplié par le nombre de positions dans la grille. En pratique, la méthode nécessite d'importantes ressources de calcul. Même avec un sous-échantillonnage de l'image, la méthode n'est pas applicable pour un traitement en temps réel. En outre, la méthode présente l'inconvénient de reposer sur l'utilisation d'un masque binaire de soustraction de fond. Hors un tel masque est susceptible de fusionner des groupes de personnes disjoints, par exemple à cause des ombres, et de fragmenter des groupes normalement joints, par exemple à cause de vêtements dont les couleurs sont localement proches des couleurs de l'arrière plan. En conséquence, l'efficacité de la méthode est limitée par celle de l'étape de soustraction de fond.

Un but de l'invention est notamment de remédier à tout ou partie des inconvénients précités en permettant un traitement de localisation d'objets en temps réel. A cet effet, l'invention a pour objet un procédé de localisation d'objets d'intérêt dans une scène observée par un système d'acquisition d'images, les objets d'intérêt étant localisés à partir d'une carte de présence initiale $p_{CP}^1$ modélisant des positions $i$ dans la scène et comprenant, pour chaque position $i$, une valeur $p_{CP}^1(i)$ représentative de la probabilité qu'un objet d'intérêt se trouve à la position $i$ considérée, chaque valeur $p_{CP}^1(i)$ étant obtenue à partir d'un critère de localisation défini dans un espace image du système d'acquisition d'images. Le procédé se caractérise en ce qu'il comprend une itération des étapes successives suivantes tant que l'une au moins des valeurs $p_{CP}^k(i)$ de la carte de présence $p_{CP}^k$ considérée pour l'itération courante k est supérieure à un seuil prédéterminé :

- déterminer la position $n^k$ dans la carte de présence $p_{CP}^k$ pour laquelle la valeur $p_{CP}^k(n_k)$ est maximale, un

objet d'intérêt étant considéré comme présent à ladite position $n^k$,

- à partir d'atomes $A_j$ prédéterminés pour chaque position $j$ de la carte de présence $p_{CP}^k$, l'atome $A_j$ d'une position $j$ comprenant, pour chaque position $i$, une valeur $A_j(i)$ représentative du recouvrement entre la projection $m'(i)$ dans l'espace image d'un modèle tridimensionnel $M'(i)$ placé à la position $i$ et la projection $m'(j)$ dans l'espace image d'un modèle tridimensionnel $M'(j)$ placé à la position $j$, chaque modèle tridimensionnel étant représentatif d'un objet d'intérêt, déterminer une carte de présence $p_{CP}^{k+1}$ dont chaque valeur $p_{CP}^{k+1}(j)$ est égale à la valeur $p_{CP}^k(j)$ diminuée d'une combinaison linéaire des valeurs $A_{nk}(j)$ des atomes $A_{nk}$ correspondant aux positions $n^k$ où des objets d'intérêt sont considérés comme présents.

Selon une forme de réalisation relativement simple, chaque valeur $A_j(j)$ d'un atome $A_j$ est déterminée comme étant le rapport du nombre de pixels communs entre les projections $m'(i)$ et $m'(j)$ sur le nombre de pixels de la projection $m'(j)$.

L'étape de détermination de la carte de présence $p_{CP}^{k+1}$ est par exemple réalisée par une minimisation aux moindres carrés entre les probabilités $p_{CP}^k(i)$ de la carte de présence de l'itération courante k et une combinaison linéaire des atomes $A_{nk}$ correspondant aux positions $n^k$ où des objets d'intérêt sont considérés comme présents à l'itération k courante.

Selon une forme particulière de réalisation, la carte de présence initiale $p_{CP}^1$ est déterminée par les étapes suivantes :

- déterminer une image de projection $B_{m(i)}$ pour chaque position $i$ de la carte de présence initiale $p_{CP}^1$, chaque image de projection $B_{m(i)}$ ayant des dimensions égales à celles d'une image du système d'acquisition d'images et correspondant à la projection $m(i)$ dans l'espace image d'un modèle tridimensionnel $M(i)$ représentatif d'un objet d'intérêt placé à la position $i$ considérée, chaque pixel de l'image de projection $B_{m(i)}$ prenant une première valeur lorsqu'il appartient à la projection $m(i)$ et une deuxième valeur sinon,
- déterminer, par un traitement de localisation d'objets réalisé à partir de l'image du système d'acquisition d'images, une image de présence d'objets ayant des dimensions égales à celles de l'image du système d'acquisition d'images, chaque pixel de l'image de présence d'objets prenant une valeur en fonction de sa correspondance à un objet présent dans la scène,
- déterminer la carte de présence initiale $p_{CP}^1$ en fonction des images de projection $B_{m(i)}$ et de l'image de présence d'objets.

Selon une première variante de réalisation, le traitement de localisation d'objets est un traitement de soustraction de fond où chaque pixel de l'image de présence d'objets prend une première valeur lorsqu'il correspond à un objet présent dans la scène et une deuxième valeur sinon.

L'étape de détermination de la carte de présence initiale $p_{CP}^1$ peut alors comprendre une étape consistant à déterminer chaque valeur $p_{CP}^1(i)$ comme étant égale au rapport du nombre de pixels ayant à la fois la première valeur dans l'image de présence d'objets et la première valeur dans l'image de projection $B_{m(i)}$ de la position $i$ considérée, sur le nombre de pixels ayant la première valeur dans ladite image de projection $B_{m(i)}$.

Selon une deuxième variante de réalisation, le traitement de localisation d'objets est un traitement de soustraction de fond où chaque pixel de l'image de présence d'objets prend une valeur en fonction de la probabilité qu'il corresponde à un objet présent dans la scène.

L'étape de détermination de la carte de présence initiale $p_{CP}^1$ peut alors comprendre une étape consistant à déterminer chaque valeur $p_{CP}^1(i)$ comme étant égale au rapport de la somme des valeurs des pixels de l'image de présence d'objets correspondant aux pixels ayant la première valeur dans l'image de projection $B_{m(i)}$ de la position $i$ considérée, sur le nombre de pixels ayant la première valeur dans ladite image de projection $B_{m(i)}$.

Selon une forme particulière de réalisation, la scène est observée par plusieurs systèmes d'acquisition d'images, la carte de présence initiale $p_{CP}^1$ étant déterminée à partir de plusieurs cartes de présence initiales $p_{CP}^c$, chaque valeur $p_{CP}^c(i)$ d'une carte de présence initiale $p_{CP}^c$ étant obtenue à partir d'un critère de localisation défini dans un espace image du système d'acquisition d'images considéré, chaque valeur $p_{CP}^1(i)$ étant égale à une moyenne de l'ensemble des valeurs $p_{CP}^c(i)$ de la position $i$ considérée. Cette forme particulière de réalisation permet de fiabiliser les valeurs $p_{CP}^1(i)$ de la carte de présence initiale $p_{CP}^1$, et de couvrir un plus grand nombre de positions selon des points de vue différents.

L'invention a notamment pour avantage qu'elle permet d'utiliser tout type de traitement de localisation pour construire la carte de présence, et non uniquement un traitement de soustraction de fond. Elle permet en outre de combiner plusieurs traitements et plusieurs points de vue.

L'invention sera mieux comprise et d'autres avantages apparaîtront à la lecture de la description qui va suivre, faite en regard de dessins annexés sur lesquels :

- la figure 1 représente schématiquement une carte de présence modélisant des positions d'occupation possible dans une scène pour des objets que l'on cherche à localiser ;
- la figure 2 représente, sous forme de logigramme, un exemple d'étapes mises en oeuvre dans le procédé de localisation d'objets d'intérêt selon l'invention ;
- la figure 3 illustre le masquage d'objets entre eux et le problème associé de localisation des objets dans l'espace image d'une caméra.

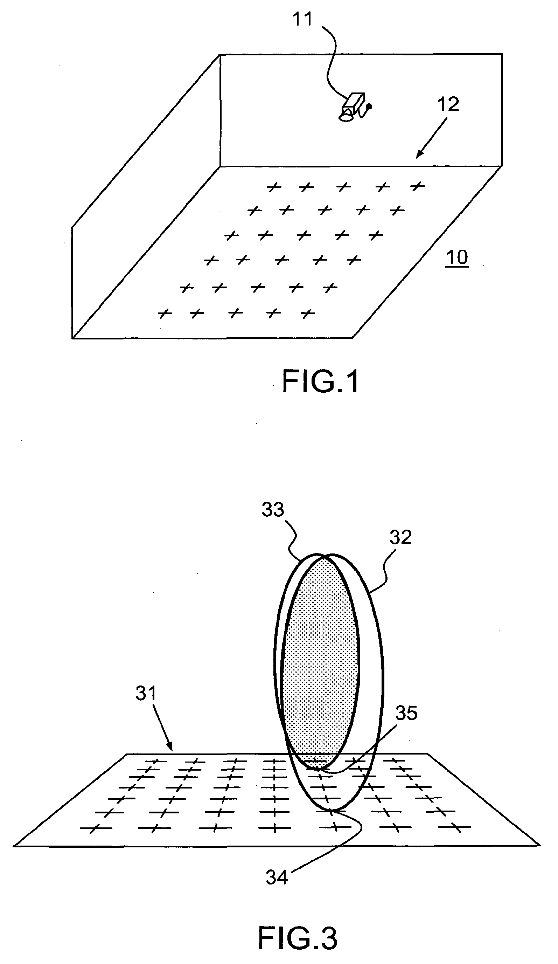

La figure 1 représente schématiquement un exemple de scène dans laquelle on cherche à localiser des objets d'intérêt. Sur la figure 1, la scène 10 représente une pièce d'un bâtiment. La scène peut néanmoins être tout type de site sur lequel on souhaite rechercher des objets. Il s'agit par exemple d'une autoroute sur laquelle on cherche à comptabiliser un nombre de véhicules, ou un hall de gare dans lequel on cherche à localiser des personnes. Un système d'acquisition d'images, tel qu'une caméra vidéo 11, est positionné et orienté de manière à observer au moins une partie de la scène. La scène est alors observée selon un point de vue déterminé. La caméra 11 fournit des images numériques à partir desquelles les objets d'intérêt sont recherchés. Chaque image est par exemple formée par une matrice de pixels comportant chacun une valeur représentative de l'intensité lumineuse en un point de la scène. La caméra 11 est calibrée. Autrement dit, la relation entre les coordonnées spatiales de chaque point de la scène et le pixel associé dans l'image est connue.

Le procédé de localisation d'objets d'intérêts selon l'invention repose sur l'utilisation d'une carte de probabilité de la présence d'objets d'intérêt dans la scène. Cette carte, appelée carte de présence et notée $p_{CP}$, comprend un ensemble de positions $i$ définies dans l'espace tridimensionnel de la scène et, pour chacune de ces positions, une valeur $p_{CP}(i)$ représentative de la probabilité qu'un objet d'intérêt se trouve à la position $i$ considérée. Les positions de la carte de présence forment ainsi des positions d'occupation possibles pour les objets d'intérêt. Les positions sont par exemple disposées de manière à former une grille. La carte de présence 12 est représentée sur la figure 1 sous forme d'un ensemble de croix représentant chacune une position d'occupation possible dans la scène pour un objet d'intérêt. Le procédé de localisation d'objets selon l'invention utilise par ailleurs des modèles tridimensionnels (3D) représentatifs de l'occupation des objets d'intérêt dans la scène. A titre d'exemple, on considère que les objets d'intérêt sont des personnes et que les positions d'occupation possibles correspondent aux emplacements où des personnes auraient leurs pieds. La carte de présence 12 peut alors être appelée carte de présence au sol. Les positions de la carte de présence peuvent aussi, selon le type d'objets d'intérêt recherchés et la géométrie de la scène, être situées ailleurs que sur un sol plan. Le modèle 3D représentatif d'une personne est par exemple un ellipsoïde. La carte de présence 12 peut être modélisée mathématiquement sous forme d'un vecteur dont chaque composante est associée à une position $i$ dans la scène et dont la valeur $p_{CP}(i)$ définit la probabilité de présence d'un objet d'intérêt. La valeur des composantes est par exemple égale à '0' lorsqu'il est certain qu'aucune personne ne se trouve à la position considérée, et égale à la valeur '1' lorsqu'il est certain qu'une personne s'y trouve.

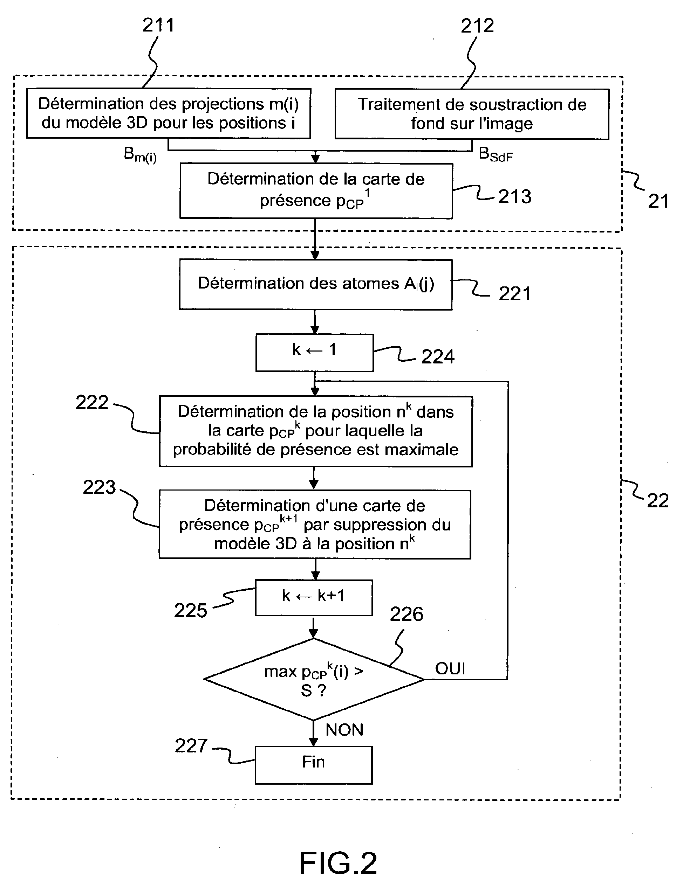

La figure 2 représente, sous forme de logigramme, un exemple d'étapes mises en oeuvre dans le procédé de localisation d'objets d'intérêt selon l'invention. Pour la suite de la description, on note $M(i)$ le modèle 3D choisi pour représenter un objet d'intérêt à la position $i$ dans la scène, et $m(i)$ sa projection dans un espace image de la caméra. Dans une première phase 21, la carte de présence $p_{CP}$ est déterminée. La phase 21 consiste ainsi à déterminer, pour chaque position $i$, la probabilité $p_{CP}(i)$ qu'un objet d'intérêt se trouve à cette position $i$ considérée. La phase 21 comprend par exemple les étapes suivantes. Dans une première étape 211, la projection $m(i)$ du modèle 3D $M(i)$ est déterminée individuellement pour chaque position $i$. Ces projections sont déterminées par la relation entre l'espace tridimensionnel de la scène et l'espace image de la caméra, c'est-à-dire entre les coordonnées spatiales de la scène et les pixels de l'image. Des images, appelées images de projection $B_{m(i)}$, de dimensions égales à celles de l'image fournie par la caméra peuvent être définies à partir des projections $m(i)$. Chaque image de projection $B_{m(i)}$ prend la valeur '1' à l'intérieur du modèle projeté $m(i)$ et '0' à l'extérieur. En notant MxN les dimensions de l'image, avec par exemple M le nombre de lignes et N le nombre de colonnes de pixels, les images de projection $B_{m(i)}$ peuvent être modélisées par la relation suivante :

$$B_{m(i)} \in \{0,1\}^{MxN}$$

Dans une deuxième étape 212, un traitement de localisation d'objets est appliqué sur l'image fournie par la caméra et dans laquelle on recherche des objets d'intérêt. Ce traitement de localisation d'objets produit une image de présence d'objets de mêmes dimensions que celles de l'image fournie par la caméra. Il s'agit par exemple d'un traitement de soustraction de fond. Ce traitement consiste à différencier les pixels correspondant au fond, c'est-à-dire à la scène en l'absence d'objets, des pixels correspondant à des objets introduits dans la scène. Ces objets peuvent ou non être des objets d'intérêt. L'image de présence d'objets produite par le traitement de soustraction de fond est appelée image de soustraction de fond $B_{SdF}$. Chaque pixel de l'image $B_{SdF}$ prend par exemple la valeur '0' s'il correspond au fond, et la valeur '1' s'il correspond à un objet. L'image $B_{SdF}$ peut ainsi être qualifiée de masque binaire. L'image $B_{SdF}$ peut être modélisée par la relation suivante :

$$B_{SdF} \in \{0,1\}^{MxN}$$

Les étapes 211 et 212 peuvent être réalisées dans un ordre quelconque. Cependant, l'étape 211 de détermination des images de projection est avantageusement réalisée préalablement aux autres étapes du procédé. En effet, pour une caméra positionnée dans une scène donnée, les images de projection $B_{m(i)}$ ne dépendent que du modèle 3D utilisé. Les cartes peuvent ainsi être déterminées au préalable pour les différents modèles 3D susceptibles d'être utilisés dans le procédé de localisation. Dans une troisième étape 213, la carte de présence $p_{CP}$ est déterminée à partir de l'image de présence d'objets, par exemple l'image de soustraction de fond $B_{SdF}$, et des images de projection $B_{m(i)}$. Pour chaque position $i$ de la carte de présence $p_{CP}$, la probabilité $p_{CP}(i)$ est par exemple déterminée comme étant le rapport du nombre de pixels ayant à la fois la valeur '1' dans l'image de soustraction de fond $B_{SdF}$ et la valeur '1' dans l'image de projection $B_{m(i)}$ de la position $i$ considérée, sur le nombre de pixels ayant la première valeur dans ladite image de projection $B_{m(i)}$ :

$$p_{CP}(i) = \frac{\left|B_{m(i)} \cap B_{SdF}\right|}{\left|B_{m(i)}\right|}$$

où l'opérateur |I| définit le nombre de pixels dans l'image I.

L'image de soustraction de fond $B_{SdF}$ déterminée lors de l'étape 212 présente l'inconvénient d'engendrer une perte d'informations exploitables lors des étapes ultérieures du procédé selon l'invention. Avantageusement, l'image $B_{SdF}$ peut être remplacée par une image dite de distance $D_{SdF}$ dans laquelle les pixels ne prennent plus nécessairement la valeur '0' ou '1', mais peuvent prendre toute valeur comprise entre '0' et '1', en fonction de la probabilité que les pixels considérés correspondent au fond ou à un objet. Les pixels prennent par exemple la valeur '0' s'il est certain qu'ils correspondent au fond, la valeur '1' s'il est certain qu'ils correspondent à un objet, ou une valeur intermédiaire en fonction de la probabilité qu'ils correspondent à un objet. L'image $D_{SdF}$ peut être modélisée par la relation suivante :

$$D_{SdF} \in [0,1]^{MxN}$$

Les probabilités $p_{CP}(i)$ de la carte de présence peuvent alors être déterminées comme étant égales au rapport de la somme des valeurs des pixels de l'image de distance $D_{SdF}$ correspondant aux pixels ayant la valeur '1' dans l'image de projection $B_{m(i)}$ de la position $i$ considérée, sur le nombre de pixels ayant la valeur '1' dans cette image de projection $B_{m(i)}$ :

$$p_{CP}(i) = \frac{\sum_{(x,y)|B_{m(i)}(x,y)=1} D_{SdF}(x,y)}{|B_{m(i)}|}$$

où les couples $(x,y)$ désignent les pixels à la ligne $x$ et à la colonne $y$ de l'image considérée.

Par ailleurs, la carte de présence peut être déterminée à partir de plusieurs caméras observant la scène selon des points de vue différents. On note $C$ un ensemble de caméras. Une carte de présence $p_{CP}^c$, est déterminée pour chacune des caméras $c$ de l'ensemble $C$, comme indiqué précédemment. Les cartes de présence peuvent être déterminées à partir d'images de soustraction de fond $B_{SdF}$ ou d'images de distance $D_{SdF}$. La carte de présence $p_{CP}^c$ doit prendre en considération le fait que chaque position $i$ de la carte $p_{CP}^c$ n'est pas nécessairement visible par toutes les caméras. Ainsi, un opérateur $v^c(i)$ peut être déterminé de manière à indiquer, pour chaque position $i$, si un modèle 3D $M(i)$ se projette ou non dans l'image d'une caméra $c$. Pour chaque position $i$, on définit un sous-ensemble $\tilde{C}(i)$ de l'ensemble $C$ comportant les caméras fournissant des images dans lesquelles les projections $m(i)$ sont visibles correctement. La carte de présence $p_{CP}$ peut alors être déterminée à partir de l'ensemble des cartes de présence $p_{CP}^c$. La probabilité $p_{CP}(i)$ de la carte de présence globale en chaque position $i$ est par exemple la moyenne géométrique des probabilités $p_{CP}^c(i)$ :

$$p_{CP}(i) = \sqrt[|\tilde{C}(i)|]{\prod_{c \in \tilde{C}(i)} p_{CP}^c(i)}$$

L'image de présence d'objets peut être déterminée autrement que par un traitement de soustraction de fond. En particulier, elle peut être déterminée par un traitement de classification. Les données de classification associées à chaque position $i$ doivent être converties en probabilités afin de pouvoir être exploitées dans la suite du procédé de localisation. Le document "Gualdi Giovanni, A. Prati, R. Cucchiara. Multi-stage Sampling with Boosting Cascades for Pedestrian Détection in Images and Videos. In Proceedings of ECCV (6)'2010. pp.196-209" fournit un exemple d'une telle conversion.

Selon une forme de réalisation particulièrement avantageuse, la carte de présence $p_{CP}$ est déterminée en chaque position $i$ à partir de plusieurs cartes de présence, par exemple la carte de présence $p_{CP}^{SdF}$ obtenue par un traitement de soustraction de fond et la carte de présence $p_{CP}^{class}$ obtenue par un traitement de classification. Les différentes cartes de présence sont par exemple combinées en faisant, position par position, le produit des probabilités associées à chaque traitement. La carte de présence $p_{CP}$ ainsi obtenue est donc moins dépendante du traitement appliqué, et donc plus fiable.

La carte de présence $p_{CP}$ fournit une première estimation de la présence d'objets d'intérêt dans la scène observée. Cette première estimation est obtenue à partir d'un critère de localisation défini dans l'espace image de la caméra. Le critère de localisation est par exemple un critère associé à un traitement de soustraction de fond ou un critère associé à un traitement de classification. Le principal inconvénient est que la présence d'un objet d'intérêt dans la scène en une position donnée risque d'entraîner la détection erronée d'objets d'intérêt en chacune des positions situées derrière la position effective. En effet, la présence d'un objet d'intérêt en une position donnée peut entraîner l'occultation de tout ou partie d'autres objets d'intérêt. Une seconde phase est donc nécessaire dans le procédé de localisation d'objets d'intérêt afin de prendre en compte les phénomènes d'occultation et de déterminer la ou les positions où les objets d'intérêt sont le plus vraisemblablement situés. Cette phase se caractérise notamment en ce que la détermination des positions effectives des objets d'intérêt est réalisée dans l'espace tridimensionnel de la carte de présence.

La figure 3 illustre le problème du masquage des objets entre eux. Une carte de présence 31 analogue à celle de la figure 1 et deux modèles 3D 32 et 33 sont représentés selon un point de vue d'une caméra, c'est-à-dire dans l'espace image de la caméra. Le premier modèle 3D 32 est localisé à une position 34 de la carte de présence 31, et le deuxième modèle 3D 33 est positionné à une position 35. Les modèles 3D 32 et 33 sont des ellipsoïdes. Dans le repère image de la caméra, les modèles 3D 32 et 33 se projettent ainsi sous forme d'ellipses. Ils sont positionnés de telle manière vis-à-vis de la caméra que leurs projections dans le repère image se recoupent largement. La zone de recoupement entre les deux ellipses est représentée par des hachures. L'objectif de la deuxième phase est donc de supprimer de la carte de présence la contribution d'un modèle 3D considéré comme présent à une position donnée en chacune des autres positions.

La deuxième phase 22 comporte les étapes suivantes. Dans une première étape 221, un modèle 3D représentatif d'un objet d'intérêt est placé successivement sur chaque position $i$, et son influence sur chacune des autres positions dans l'espace image de la caméra est déterminée. L'influence d'un objet d'intérêt à une position $i$ donnée sur chacune des autres positions, notées $j$, de la carte de présence $p_{CP}$ est modélisée par une entité appelée "atome" $A_i$. On note $N$ le nombre de positions $i$ ou $j$ dans la carte de présence, $M'(i)$ un modèle 3D représentatif d'un objet d'intérêt placé à la position $i$, et $m'(i)$ sa projection dans l'espace image de la caméra. Le modèle 3D $M'(i)$ peut être identique au modèle 3D $M(i)$ utilisé dans la première phase 21. La projection $m'(i)$ dans l'espace image est dans ce cas identique à la projection $m(i)$. Les atomes $A_i$ sont avantageusement modélisés mathématiquement sous forme d'un vecteur pour chaque position $i$, la valeur $A_i(j)$ de la composante d'un vecteur $A_i$ étant représentative de l'influence de la présence d'un modèle 3D $M'(i)$ à la position $i$ considérée sur la position $j$. La valeur $A_i(j)$ d'un atome $A_i$ est par exemple déterminée par la relation suivante :

$$A_i(j) = \frac{|m'(i) \cap m'(j)|}{m'(j)}$$

Cette relation définit, pour chaque couple de positions $(i,j)$, le rapport du nombre de pixels en commun entre deux projections $m'(i)$ et $m'(j)$ de modèles 3D $M'(i)$ et $M'(j)$, sur le nombre de pixels de la projection $m'(i)$ du modèle 3D $M'(j)$. La relation est illustrée sur la figure 3 par les deux ellipses et leur zone de recoupement. La première étape 221 peut être réalisée préalablement à toute autre étape du procédé. Dans le cadre d'un traitement en temps réel sur un flux d'images, l'étape 221 peut n'être réalisée qu'une seule fois pour l'ensemble des images, les atomes $A_i(j)$ étant indépendants des images. Dans une deuxième étape 222, on détermine, dans la carte de présence, la position $n$ à laquelle un objet d'intérêt a le plus de chances de se trouver. On considère alors qu'un objet d'intérêt se trouve à cette position $n$. La position $n$ peut être déterminée en recherchant la plus forte probabilité $p_{CP}(i)$ dans la carte de présence $p_{CP}$. Il s'agit alors de rechercher la probabilité maximale dans la carte de présence. La détermination de la position $n$ à laquelle un objet d'intérêt a le plus de chances de se trouver peut comporter une étape préalable consistant à moyenner les probabilités $p_{CP}(i)$ sur un voisinage local. Cette étape préalable permet de lisser des probabilités $p_{CP}(i)$ anormalement élevées en certaines positions, par exemple du fait du traitement de soustraction de fond. La recherche d'une position $n$ peut également faire l'objet d'autres étapes préalables visant à affiner les probabilités $p_{CP}(i)$ de la carte de présence $p_{CP}$. Dans une troisième étape 223, une nouvelle carte de présence est déterminée en supprimant de la carte de présence initiale la contribution apportée par un objet 3D en position $n$ à chaque position $i$.

Les étapes 222 et 223 peuvent être réitérées de manière à localiser tous les objets d'intérêt dans la scène. Sur la figure 2, la répétition des étapes 222 et 223 est effectuée au moyen d'un compteur de valeur k, la carte de présence étant indicée par la valeur $k$ $(p_{CP}^{k})$. Dans une étape d'initialisation 224, réalisée à la suite de l'étape 221 ou, le cas échéant, de l'étape 213, la valeur k est mise à la valeur '1'. La carte de présence déterminée lors de l'étape 213 s'écrit donc $p_{CP}^{1}$. La première itération de l'étape 222 est réalisée à la suite de l'étape 224 avec la carte de probabilité $p_{CP}^{1}$. L'étape 223 est réalisée à la suite de chaque itération de l'étape 222. Pour une itération k donnée, les probabilités de la nouvelle carte de présence, notée $p_{CP}^{k+1}$, sont déterminées en fonction de la carte de présence $p_{CP}^{k}$ et de la dernière position $n^k$ à laquelle un objet d'intérêt a été considéré comme étant présent. À la suite de chaque étape 223, la valeur k du compteur est incrémentée d'une unité dans une étape 225. Pour une itération k donnée, l'étape 223 peut être modélisée par la relation suivante :

$$\forall i \in N, p_{CP}^{k+1}(i) = p_{CP}^{k}(i) - A_{n^k}(i)$$

En pratique, une simple soustraction ne donne pas de bons résultats. En effet, un atome représente l'influence d'un modèle 3D, par définition théorique, sur d'autres modèles 3D identiques. Cette influence est assimilable à une probabilité de présence. L'influence est donc parfaite, alors que la carte de présence déterminée à partir de critères image n'est pas parfaite. En conséquence, l'atome $A_{nk}(i)$ doit être pondéré afin de prendre en compte ce phénomène. Le poids est déterminé de sorte que la probabilité $p_{CP}^{k+1}(n^k)$ prenne la valeur nulle ou quasi nulle, l'interaction entre deux modèles placés à la même position étant totale. Les probabilités $p_{CP}^{k+1}(i)$ des positions voisines de la position $n^k$ diminuent, tandis que les probabilités des positions plus éloignées restent inchangées. Plus généralement, l'étape 223 consiste à déterminer les probabilités $p_{CP}^{k+1}(i)$ de la nouvelle carte de présence, inférieures à la précédente, en fonction de l'interaction entre un modèle 3D placé à la position $n^k$ et un modèle 3D placé successivement sur chaque position $i$ de la carte de présence. Une étape 226 est réalisée à la suite de l'étape 225. Elle consiste à déterminer si des objets d'intérêt sont encore susceptibles de se trouver dans la scène. A cet effet, la probabilité maximale $(\max_N p_{CP}^k(i))$ dans la carte de présence considérée est comparée à un seuil prédéterminé S. Ce seuil S est par exemple égal à 0,5. Si la probabilité maximale est supérieure au seuil, les étapes 222, 223, 225 et 226 sont réitérées afin de déterminer la nouvelle position $n^k$ dans la nouvelle carte de présence où un objet d'intérêt est le plus susceptible de se trouver. Si la probabilité maximale est inférieure au seuil, cela signifie que tous les objets d'intérêt dans la scène ont dû être localisés. Il est donc mis fin au procédé de localisation dans une étape 227. L'étape 226 pourrait, à titre d'alternative, être réalisée en déterminant si l'une au moins des probabilités $(p_{CP}^k(i))$ dans la carte de présence considérée est supérieure au seuil S.

Selon une forme particulière de réalisation, l'étape 223 de détermination des probabilités $p_{CP}^{k+1}(i)$ de la carte de présence $p_{CP}^{k+1}$ est réalisée par une minimisation aux moindres carrés entre les probabilités $p_{CP}^1(i)$ de la carte de présence de l'itération initiale et une combinaison linéaire des atomes $A_{nk}$ correspondant aux positions $n^k$ où des objets d'intérêt sont considérés comme présents à l'itération k courante.

Par rapport aux méthodes de l'état de l'art, le procédé de localisation d'objets selon l'invention permet de déterminer les positions des objets d'intérêt par des opérations réalisées directement dans l'espace de la carte de présence, sans passer dans l'espace image. Les atomes modélisant les influences de la présence d'objets d'intérêt entre les différentes positions peuvent être déterminés préalablement. Ainsi, à partir d'une carte de présence initiale, la localisation d'objets d'intérêt est réalisée dans un espace de dimension égale au nombre de positions dans la carte de présence. Par ailleurs, le procédé de localisation selon l'invention est un procédé dit constructif, c'est-à-dire qu'il part d'une configuration initiale où aucun objet d'intérêt n'est présent, les positions où un objet est effectivement présent étant déterminées itérativement à partir des maximums de probabilité dans les différentes cartes de présence calculées au cours de l'algorithme. Des positions correctes sont donc déterminées au fur et à mesure des itérations sans remise en cause ultérieure. A l'inverse, les méthodes de l'état de l'art sont dites dégressives, c'est-à-dire qu'elles partent d'une configuration où des objets sont considérés comme présents sur toutes les positions possibles de la carte de présence, les positions peu vraisemblables étant éliminées itérativement.

**Revendications**

1.  Procédé de localisation d'objets d'intérêt dans une scène (10) observée par un système d'acquisition d'images (11), les objets d'intérêt étant localisés à partir d'une carte de présence initiale $p_{CP}^1$ (12) modélisant des positions $i$ dans la scène et comprenant, pour chaque position $i$, une valeur $p_{CP}^1(i)$ représentative de la probabilité qu'un objet d'intérêt se trouve à la position $i$ considérée, chaque valeur $p_{CP}^1(i)$ étant obtenue à partir d'un critère de localisation défini dans un espace image du système d'acquisition d'images, le procédé étant **caractérisé en ce qu'**il comprend une itération des étapes successives suivantes tant que l'une au moins des valeurs $p_{CP}^k(i)$ de la carte de présence $p_{CP}^k$ considérée pour l'itération courante k est supérieure à un seuil prédéterminé :

    ▪ déterminer (222) la position $n^k$ dans la carte de présence $p_{CP}^k$ pour laquelle la valeur $p_{CP}^k(n_k)$ est maximale, un objet d'intérêt étant considéré comme présent à ladite position $n^k$,

- à partir d'atomes $A_j$ prédéterminés pour chaque position $j$ de la carte de présence $p_{CP}^k$, l'atome $A_j$ d'une position $j$ comprenant, pour chaque position $i$, une valeur $A_j(i)$ représentative du recouvrement entre la projection $m'(i)$ dans l'espace image d'un modèle tridimensionnel $M'(i)$ (32) placé à la position $i$ et la projection $m'(j)$ dans l'espace image d'un modèle tridimensionnel $M'(j)$ (33) placé à la position $j$, chaque modèle tridimensionnel étant représentatif d'un objet d'intérêt, déterminer (223) une carte de présence $p_{CP}^{k+1}$ dont chaque valeur $p_{CP}^{k+1}(j)$ est égale à la valeur correspondante de la carte de présence initiale $p_{CP}^1$ ou de l'une des cartes de présence déterminée lors d'une itération précédente, diminuée d'une combinaison linéaire des valeurs $A_{n^k}(j)$ des atomes $A_{n^k}$ correspondant aux positions $n^k$ où des objets d'intérêt sont considérés comme présents.

2. Procédé selon la revendication 1, dans lequel chaque valeur $A_j(j)$ d'un atome $A_j$ est déterminée comme étant le rapport du nombre de pixels communs entre les projections $m'(i)$ et $m'(j)$ sur le nombre de pixels de la projection $m'(i)$.

3. Procédé selon l'une des revendications 1 et 2, dans lequel l'étape (223) de détermination de la carte de présence $p_{CP}^{k+1}$ est réalisée par une minimisation aux moindres carrés entre, d'une part, les probabilités $p_{CP}^k(i)$ de la carte de présence de l'itération courante k ou les probabilités $p_{CP}^1(i)$ (i) de la carte de présence initiale $p_{CP}^1$ et, d'autre part, une combinaison linéaire des atomes $A_{n^k}$ correspondant aux positions $n^k$ où des objets d'intérêt sont considérés comme présents à l'itération k courante.

4. Procédé selon l'une des revendications précédentes, dans lequel la carte de présence initiale $p_{CP}^1$ est déterminée par les étapes suivantes :

- déterminer (211) une image de projection $B_{m(i)}$ pour chaque position $i$ de la carte de présence initiale $p_{CP}^1$, chaque image de projection $B_{m(i)}$ ayant des dimensions égales à celles d'une image du système d'acquisition d'images (11) et correspondant à la projection $m(i)$ dans l'espace image d'un modèle tridimensionnel $M(i)$ représentatif d'un objet d'intérêt placé à la position $i$ considérée, chaque pixel de l'image de projection $B_{m(i)}$ prenant une première valeur lorsqu'il appartient à la projection $m(i)$ et une deuxième valeur sinon,
- déterminer (212), par un traitement de localisation d'objets réalisé à partir de l'image du système d'acquisition d'images (11), une image de présence d'objets ayant des dimensions égales à celles de l'image du système d'acquisition d'images (11), chaque pixel de l'image de présence d'objets prenant une valeur en fonction de sa correspondance à un objet présent dans la scène,
- déterminer (213) la carte de présence initiale $p_{CP}^1$ en fonction des images de projection $B_{m(i)}$ et de l'image de présence d'objets.

5. Procédé selon la revendication 4, dans lequel le traitement de localisation d'objets est un traitement de soustraction de fond, chaque pixel de l'image de présence d'objets prenant une première valeur lorsqu'il correspond à un objet présent dans la scène et une deuxième valeur sinon.

6. Procédé selon la revendication 5, dans lequel l'étape (213) de détermination de la carte de présence initiale $p_{CP}^1$ comprend une étape consistant à déterminer chaque valeur $p_{CP}^1(i)$ comme étant égale au rapport du nombre de pixels ayant à la fois la première valeur dans l'image de présence d'objets et la première valeur dans l'image de projection $B_{m(i)}$ de la position $i$ considérée, sur le nombre de pixels ayant la première valeur dans ladite image de projection $B_{m(i)}$.

7. Procédé selon la revendication 4, dans lequel le traitement de localisation d'objets est un traitement de soustraction de fond, chaque pixel de l'image de présence d'objets prenant une valeur en fonction de la probabilité qu'il corresponde à un objet présent dans la scène.

8. Procédé selon la revendication 7, dans lequel l'étape (213) de détermination de la carte de présence initiale $p_{CP}^1$

comprend une étape consistant à déterminer chaque valeur $p_{CP}^1(i)$ comme étant égale au rapport de la somme des valeurs des pixels de l'image de présence d'objets correspondant aux pixels ayant la première valeur dans l'image de projection $B_{m(i)}$ de la position $i$ considérée, sur le nombre de pixels ayant la première valeur dans ladite image de projection $B_{m(i)}$.

9. Procédé selon l'une des revendications précédentes, dans lequel la scène (10) est observée par plusieurs systèmes d'acquisition d'images (11), la carte de présence initiale $p_{CP}^1$ étant déterminée à partir de plusieurs cartes de présence initiales $p_{CP}^c$, chaque valeur $p_{CP}^c(i)$ d'une carte de présence initiale $p_{CP}^c$ étant obtenue à partir d'un critère de localisation défini dans un espace image du système d'acquisition d'images considéré, chaque valeur $p_{CP}^1(i)$ étant égale à une moyenne de l'ensemble des valeurs $p_{CP}^c(i)$ de la position $i$ considérée.

**Patentansprüche**

1. Verfahren zum Lokalisieren von interessierenden Objekten in einer Szene (10), die von einem Bilderfassungssystem (11) beobachtet wird, wobei die interessierenden Objekte ausgehend von einer Ausgangs-Präsenzkarte $p_{CP}^1$ (12) lokalisiert werden, die Positionen $i$ in der Szene modelliert und für jede Position $i$ einen Wert $p_{CP}^1(i)$ umfasst, der für die Wahrscheinlichkeit repräsentativ ist, dass sich ein interessierendes Objekt an der betrachteten Position $i$ befindet, wobei jeder Wert $p_{CP}^1(i)$ aus einem Lokalisationskriterium abgeleitet wird, das in einem Bildraum des Bilderfassungssystems definiert ist,
wobei das Verfahren **dadurch gekennzeichnet ist, dass** es eine Iteration der folgenden aufeinanderfolgenden Schritte umfasst, solange mindestens einer der Werte $p_{CP}^k(i)$ der für die laufende Iteration k betrachteten Präsenzkarte $p_{CP}^k$ über einem vorbestimmten Grenzwert liegt:

- Bestimmen (222) der Position $n^k$ auf der Präsenzkarte $p_{CP}^k$, für welche der Wert $p_{CP}^k(n_k)$ maximal ist, wobei ein interessierendes Objekt als an der Position $n^k$ präsent betrachtet wird,
- ausgehend von für jede Position $j$ der Präsenzkarte $p_{CP}^k$ vorbestimmten Atomen $A_j$, wobei das Atom $A_j$ einer Position $j$ für jede Position $i$ einen Wert $A_j(i)$ umfasst, der für die Überlappung zwischen der Projektion $m'(i)$ im Bildraum eines dreidimensionalen Modells $M'(i)$ (32), das an der Position $i$ platziert ist, und der Projektion $m'(j)$ im Bildraum eines dreidimensionalen Modells $M'(j)$ (33), das an der Position $j$ platziert ist, repräsentativ ist, wobei jedes dreidimensionale Modell für ein interessierendes Objekt repräsentativ ist, Bestimmen (223) einer Präsenzkarte $p_{CP}^{k+1}$, bei der jeder Wert $p_{CP}^{k+1}(j)$ gleich dem entsprechenden Wert der Ausgangs-Präsenzkarte $p_{CP}^1$ oder einer der Präsenzkarten ist, die bei einer vorangehenden Iteration bestimmt wurden, verringert um eine lineare Kombination der Werte $A_nk(j)$ der Atome $A_nk$, die den Positionen $n^k$ entsprechen, wo interessierende Objekte als vorhanden betrachtet werden.

2. Verfahren nach Anspruch 1, wobei jeder Wert $A_i(j)$ eines Atoms $A_i$ als das Verhältnis der Anzahl gemeinsamer Pixel zwischen den Projektionen $m'(i)$ und $m'(j)$ zur Pixelanzahl der Projektion $m'(j)$ bestimmt ist.

3. Verfahren nach einem der Ansprüche 1 und 2, wobei der Schritt (223) zur Bestimmung der Präsenzkarte $p_{CP}^{k+1}$ anhand einer Minimierung auf die kleinsten Quadrate zwischen zum einen den Wahrscheinlichkeiten $p_{CP}^k(i)$ der Präsenzkarte der laufenden Iteration k oder den Wahrscheinlichkeiten $p_{CP}^1$ (i) der Ausgangs-Präsenzkarte $p_{CP}^1$ und zum anderen einer linearen Kombination der Atome $A_nk$, die den Positionen $n^k$ entsprechen, wobei interessierende Objekte als bei der laufenden Iteration k vorhanden betrachtet werden, durchgeführt wird.

**4.** Verfahren nach einem der vorangehenden Ansprüche, wobei die Ausgangs-Präsenzkarte $p_{CP}^1$ von den folgenden Schritten bestimmt wird:

- Bestimmen (211) eines Projektionsbilds $B_{m(i)}$ für jede Position $i$ der Ausgangs-Präsenzkarte $p_{CP}^1$, wobei jedes Projektionsbild $B_{m(i)}$ Abmessungen hat, die dem eines Bilds des Bilderfassungssystems (11) entsprechen und der Projektion $m(i)$ im Bildraum eines dreidimensionalen Modells $M(i)$ entspricht, das für ein interessierendes Objekt repräsentativ ist, das an der betrachteten Position $i$ platziert ist, wobei jedes Pixel des Projektionsbilds $B_{m(i)}$ einen ersten Wert annimmt, wenn es zu der Projektion $m(i)$ gehört, und anderenfalls einen zweiten Wert annimmt,

- Bestimmen (212), durch eine Objektlokalisierungsverarbeitung, die ausgehend von dem Bild des Bilderfassungssystems (11) durchgeführt wird, eines Objektpräsenzbilds mit denselben Abmessungen wie das Bild des Bilderfassungssystems (11), wobei jedes Pixel des Objektpräsenzbilds einen Wert in Abhängigkeit von seiner Übereinstimmung mit einem in der Szene präsenten Objekt annimmt,

- Bestimmen (213) der Ausgangs-Präsenzkarte $p_{CP}^1$ in Abhängigkeit von den Projektionsbildern $B_{m(i)}$ und dem Objektpräsenzbild.

**5.** Verfahren nach Anspruch 4, wobei die Objektlokalisierungsverarbeitung eine Background-Subtraktionsverarbeitung ist, wobei jedes Pixel des Objektpräsenzbilds einen ersten Wert annimmt, wenn es einem Objekt entspricht, das in der Szene präsent ist, und anderenfalls einen zweiten Wert annimmt.

**6.** Verfahren nach Anspruch 5, wobei der Schritt (213) zur Bestimmung der Ausgangs-Präsenzkarte $p_{CP}^1$ einen Schritt umfasst, der darin besteht, jeden Wert $p_{CP}^1$ als gleich dem Verhältnis der Anzahl der Pixel, die sowohl den ersten Wert im Objektpräsenzbild und den ersten Wert im Projektionsbild $B_{m(i)}$ der betrachteten Position $i$ haben, zur Anzahl der Pixel, die den ersten Wert im Projektionsbild $B_{m(i)}$ haben, zu bestimmen.

**7.** Verfahren nach Anspruch 4, wobei die Objektlokalisierungsverarbeitung eine Background-Subtraktionsverarbeitung ist, wobei jedes Pixel des Objektpräsenzbilds einen Wert in Abhängigkeit von der Wahrscheinlichkeit annimmt, dass es einem Objekt entspricht, das in der Szene präsent ist.

**8.** Verfahren nach Anspruch 7, wobei der Schritt (213) zur Bestimmung der Ausgangs-Präsenzkarte $p_{CP}^1$ einen Schritt umfasst, der darin besteht, jeden Wert $p_{CP}^1(i)$ als gleich dem Verhältnis der Summe der Werte der Pixel des Objektpräsenzbilds, die den Pixeln entsprechen, die den ersten Wert im Projektionsbild $B_{m(i)}$ der betrachteten Position $i$ haben, zur Anzahl der Pixel, die den ersten Wert im Projektionsbild $B_{m(i)}$ haben, zu bestimmen.

**9.** Verfahren nach einem der vorangehenden Ansprüche, wobei die Szene (10) von mehreren Bilderfassungssystemen (11) beobachtet wird, wobei die Ausgangs-Präsenzkarte $p_{CP}^1$ ausgehend von mehreren Ausgangs-Präsenzkarten $p_{CP}^c$ bestimmt wird, wobei jeder Wert $p_{CP}^c(i)$ einer Ausgangs-Präsenzkarte $p_{CP}^c$ ausgehend von einem Lokalisierungskriterium gewonnen wird, das in einem Bildraum des betrachteten Bilderfassungssystems definiert ist, wobei jeder Wert $p_{CP}^1(i)$ gleich einem Durchschnitt der Gruppe der Werte $p_{CP}^c(i)$ der betrachteten Position $i$ ist.

## Claims

**1.** A method for locating objects of interest in a scene (10) observed by an image acquisition system (11), said objects of interest being located on the basis of an initial presence map $p_{CP}^1$ (12) modelling positions $i$ in said scene and comprising, for each position $i$, a value $p_{CP}^1(i)$ that represents the likelihood of an object of interest being found at the considered position $i$, each value $p_{CP}^1(i)$ being obtained on the basis of a location criterion that is defined in an image space of said image acquisition system,

said method being **characterised in that** it comprises an iteration of the following successive steps as long as at least one of the values $p_{CP}^k(i)$ of the presence map $p_{CP}^k$ that is considered for the current iteration k is higher than a predetermined threshold:

- determining (222) the position $n^k$ in said presence map $p_{CP}^k$ for which the value $p_{CP}^k(n_k)$ is a maximum, with an object of interest being considered to be present at said position $n^k$;

- determining (223) a presence map $p_{CP}^{k+1}$, on the basis of atoms $A_j$ that are predetermined for each position $j$ of said presence map $p_{CP}^k$, with the atom $A_j$ of a position $j$ comprising, for each position $i$, a value $A_j(i)$ that represents the overlap between the projection $m'(i)$ in the image space of a three-dimensional model $M'(i)$ (32) placed at the position $i$ and the projection $m'(j)$ in the image space of a three-dimensional model $M'(j)$ (33) placed at the position $j$, each three-dimensional model representing an object of interest, with each value $p_{CP}^{k+1}(j)$ of said presence map $p_{CP}^{k+1}$ being equal to the corresponding value of said initial presence map $p_{CP}^1$ or of one of the presence maps determined during a previous iteration, decreased by a linear combination of the values $A_n{}^k(j)$ of the atoms $A_n{}^k$ that correspond to the positions $n^k$ where objects of interest are considered to be present.

2. The method according to claim 1, wherein each value $A_i(j)$ of an atom $A_i$ is determined to be the ratio of the number of pixels shared between said projections $m'(i)$ and $m'(j)$ to the number of pixels of said projection $m'(j)$.

3. The method according to one of claims 1 and 2, wherein said step (223) of determining said presence map $p_{CP}^{k+1}$ is carried out by a least squares minimisation between the likelihoods $p_{CP}^k(i)$ of the presence map of the current iteration k or the likelihoods $p_{CP}^1(i)$ of said initial presence map $p_{CP}^1$, on the one hand, and a linear combination of the atoms $A_n{}^k$ that correspond to the positions $n^k$ where objects of interest are considered to be present at the current iteration k, on the other hand.

4. The method according to one of the preceding claims, wherein said initial presence map $p_{CP}^1$ is determined using the following steps:

- determining (211) a projection image $B_{m(i)}$ for each position $i$ of said initial presence map $p_{CP}^1$, with the dimensions of each projection image $B_{m(i)}$ being equal to those of an image of said image acquisition system (11) and corresponding to said projection $m(i)$ in the image space of a three-dimensional model $M(i)$ representing an object of interest placed at the considered position $i$, each pixel of said projection image $B_{m(i)}$ assuming a first value when it belongs to said projection $m(i)$ and a second value otherwise;
- determining (212), using a process for locating objects that is carried out on the basis of the image of said image acquisition system (11), an image of the presence of objects with dimensions that are equal to those of the image of said image acquisition system (11), each pixel of said image of the presence of objects assuming a value as a function of its correspondence to an object present in said scene;
- determining (213) said initial presence map $p_{CP}^1$ as a function of said projection images $B_{m(i)}$ and of said image of the presence of objects.

5. The method according to claim 4, wherein said process for locating objects is a background subtraction process, with each pixel of said image of the presence of objects assuming a first value when it corresponds to an object present in said scene and a second value otherwise.

6. The method according to claim 5, wherein said step (213) of determining said initial presence map $p_{CP}^1$ comprises a step of determining each value $p_{CP}^1(i)$ as being equal to the ratio of the number of pixels having both the first value in said image of the presence of objects and the first value in said projection image $B_{m(i)}$ of the considered

position $i$ to the number of pixels with the first value in said projection image $B_{m(i)}$.

7. The method according to claim 4, wherein said process for locating objects is a background subtraction process, with each pixel of said image of the presence of objects assuming a value as a function of the likelihood that it corresponds to an object present in said scene.

8. The method according to claim 7, wherein said step (213) of determining said initial presence map $p_{CP}^1$ comprises a step of determining each value $p_{CP}^1(i)$ as being equal to the ratio of the sum of the values of the pixels of said image of the presence of objects that correspond to the pixels with the first value in said projection image $B_{m(i)}$ of the considered position $i$ to the number of pixels with the first value in said projection image $B_{m(i)}$.

9. The method according to one of the preceding claims, wherein said scene (10) is observed by a plurality of image acquisition systems (11), said initial presence map $p_{CP}^1$ being determined on the basis of a plurality of initial presence maps $p_{CP}^c$, with each value $\overline{p_{CP}^c(i)}$ of an initial presence map $p_{CP}^c$ being obtained on the basis of a location criterion that is defined in an image space of the considered image acquisition system, each value $p_{CP}^1(i)$ being equal to a mean of the set of values $\overline{p_{CP}^c(i)}$ of the considered position $i$.

FIG.1

FIG.3

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ALAHI ALEXANDRE ; L. JACQUES ; Y. BOURSIER ; P. VANDERGHEYNST.** Sparsity-driven People Localization Algorithm: Evaluation in Crowded Scenes Environments. *IEEE International Workshop on Performance Evaluation of Tracking and Surveillance, Snowbird, Utah,* 2009

- **GUALDI GIOVANNI ; A. PRATI ; R. CUCCHIARA.** Multi-stage Sampling with Boosting Cascades for Pedestrian Détection in Images and Videos. *Proceedings of ECCV (6),* 2010, 196-209